# EUROPEAN PATENT SPECIFICATION

(11) **EP 3 098 495 B1**
(45) Date of publication and mention of the grant of the patent: **04.04.2018**
(21) Application number: 15180239.4
(22) Date of filing: 07.08.2015
(51) Int. Cl.: F16L 3/12

(54) **SUPPORTING CLIP AND PIPE ASSEMBLY**
BEFESTIGUNGSCLIP UND ROHRANORDNUNG
CLIP DE SUPPORT ET ENSEMBLE DE TUYAUX

(30) Priority: 27.05.2015 EP 15169383
(43) Date of publication of application: 30.11.2016
(73) Proprietor: Cooper-Standard Automotive (Deutschland) GmbH, 89601 Schelklingen (DE)
(72) Inventor: Guersing, Ludovic, 57550 Dalem (FR); Janssen-Weets, Pierre, 57155 Marly (FR)
(74) Representative: Flügel Preissner Schober Seidel

(56) References cited:
- EP-A1- 2 216 575
- EP-A2- 1 178 251
- FR-A7- 2 247 936
- US-A1- 2010 175 773

## Description

The invention relates to a supporting clip for supporting a tubular member, such as a fuel pipe or a brake pipe.

Modern cars are increasingly designed using modular concepts. The individual subassemblies are usually constructed and produced not by the car manufacturers themselves but component suppliers. The component suppliers are highly specialized experts in their particular fields, such as engines, drive trains, sealings, and brake and fuel systems. The separate development of these or similar components usually at different location causes logistical challenges. The subassemblies are preassembled at the component supplier and then delivered for final assembly to the car manufacturer. For example, in the case of break line assemblies, usually supporting clips, sometimes called mounting clips, of different kind are used to preassemble the break pipes to an assembly. Alternatively, the break pipes are currently molded over using low pressure injection molding.

EP 0 638 756 A1, for example, discloses a mounting clip for mounting a pipe on a support. The mounting clip comprises a clamp composed of a first shell and a second shell. The first shell and the second shell are made of a thermoplastic material and are connected via a resilient portion forming an integral hinge. The first shell is fastened to a base. The first shell includes a first vibration damping means, and the second shell includes a second vibration damping means. The first vibration damping means and the second vibration damping means are made of an elastomeric material like synthetic or natural rubber.

Another mounting clip is described in DE 41 41 689 C2. The mounting clip comprises a holding member, a housing, and a cover. The housing includes fastening protrusions which are connected to the holding member. The housing and the cover form a cavity. The mounting clip further comprises a damping member made of an elastomeric material. The damping member is accommodated within the cavity and includes three openings for mounting fuel and brake pipes.

A similar holding device for fuel and break pipes is disclosed by DE 36 02 625 C1. The holding device comprises three damping members, a housing, and a securing plate. The damping members are inserted into the housing and each accommodate a pipe. The securing plate has a fastening bolt and is fastened to the housing, thereby securing the pipes in place.

DE 30 28 998 A1 discloses a holding device for brake pipes. The holding device comprises a bracket and a mounting member. The bracket includes a first leg and a second leg. The first leg and the second leg can be bent to positions and in order to fasten the mounting member. The mounting member is configured to mount pipes. The mounting member has a slit forming a resilient or integral hinge which allows to insert the pipes.

EP 1 238 844 B1 shows an integrally formed holding arrangement. The holding arrangement includes a floor pan, a flat element, and damping element. The flat element is, for example, an underfloor cover of a vehicle. The damping element is configured to mount a pipe and includes interruptions or recesses. The damping element is preferably made of an elastomeric material like sponge rubber.

The different mounting clips, holding devices and arrangements have in common that they merely engage the tubes to be mounted at one position. Consequently, there is a risk for deformation of an assembly caused by external loads. In particular this applies to the transport from the component supplier to the car manufacturer.

Furthermore, EP 2 216 575 A1 discloses a fastening member for fastening a flexible pipe which comprises a first supporting portion and a second supporting portion for supporting the pipe at a first position and a second position, respectively. The first supporting portion and the second supporting portion are pivotable relative to each other about a rotational axis. The relative rotational movement of the first supporting portion and the second supporting portion can be prevented by screws to be located in predetermined openings.

US 2010/175773 A1 discloses a hose or cable protector which has a first supporting portion and a second supporting portion that are pivotable relative to each other about a common axis.

EP 1 178 251 A2 discloses an adjustable corner fitting for cables comprising interconnectable members. One of the members have at least an arcuate slot and the other of the members has at least one boss being positioned within the slot. The slot has a curvature and a length that constrains the boss within the slot and allows pivoting of the first member relative to the second member about a pivot point within a predetermined range of relative angular movement.

FR 2 247 936 A7 discloses a guidance member configured to guide a tubular member. The guidance member comprises a first supporting portion and a second supporting portion which are pivotable relative to each other within certain limits. The guidance member further comprises a tension spring which urges a tension on the supporting portion, thereby ensuring a permanent contact pressure of suction cups disposed at the end of the supporting portions.

It is the object of the invention to provide a supporting clip which allows for an increased stability of pipe assemblies against external loads. The object is achieved with a supporting clip comprising the features of claim 1. Advantageous embodiments of the supporting clip are the subject-matter of claims 2 to 13. Advantageous uses of the supporting clip are the subject-matter of claims 14 and 15.

A supporting clip is configured to support at least one tubular member, for example at a bending portion. The tubular member is in particular a fuel pipe or a brake pipe. The supporting clip extends in a longitudinal direction and comprises a first supporting portion, a second supporting portion, and a locking structure. The first supporting portion is configured to support the tubular member at a first position. The second supporting portion is configured to support the tubular member at a second position. The second position is spaced apart from the first position in the longitudinal direction along the tubular member. The locking structure is disposed between the first supporting portion and the second supporting portion. The first supporting portion and the second supporting portion are configured to be pivotable relative to each other about a rotational axis, thereby defining an angular position. The locking structure is configured to prevent a relative rotational movement between the first supporting portion and the second supporting portion when the first supporting portion and the second supporting portion are arranged at predetermined angular positions.

This design of the supporting clip can reduce the relative movement, such as sliding, between the tubular members. The tubular members stay in position after preassembly till assembled on the vehicle under production. Limiting the relative movement of the tubular members also allows for better bundle handling, since transportation loads, for example due to vibrations, have a reduced effect on the final shape as it arrives at the car manufacturer. Therefore, using the advantageous supporting clip can provide for an easy out-of-the box assembly on the vehicle under production. At the same time, the clip is flexible enough to allow for an angular movement of the first supporting portion and the second supporting portion in order to accept different bending angles of the tubular members. The supporting clip therefore has a larger application range and can be adapted to multiple designs. Furthermore, the supporting clip is a smaller component compared to a whole break or fuel line assembly. Thus, sensitive manufacturing parameters such as temperature, humidity, and dry time, can be controlled more reliably.

The supporting clip can further include a joint having a first leg and a second leg. The first leg preferably includes the first supporting portion. The second leg preferably includes the second supporting portion. Advantageously the joint includes a flexure bearing. In a preferred embodiment up to three joints are provided, in particular configured as flexure bearings. However, other configurations of the joints are possible such as hinges and the like. The joints can also be composed of a mixture of known joints and flexure bearings. The addition of a joint further restricts movement capability of the first supporting portion or the second supporting portion, thereby increasing stability of the supporting clip against external loads.

In a preferred embodiment the first supporting portion comprises a first support for a first tubular member and a second support for a second tubular member. Preferably the second support is spaced apart from the first support at a first distance in a transverse direction extending substantially orthogonal to the longitudinal direction. In a further preferred embodiment the second supporting portion comprises a third support for the first tubular member and a fourth support for the second tubular member. Preferably the fourth support is spaced apart from the third support at a second distance in the transverse direction. The first distance and the second distance can be equal. It should be noted that the number of supports is not limited to four. It is rather possible to arrange the number of supports needed for a particular configuration of the tubular members. Consequently, there are also arrangements possible including three supports or more than four supports. The first supporting portion can be configured to engage tubular member in a form fitting manner. Preferably the first supporting portion includes a fastening latch. Alternatively or additionally the second supporting portion can be configured to engage the tubular member in a form fitting manner. Preferably the second supporting portion include a fastening latch. Providing an individual support for a plurality of tubular members further promotes stability of the supporting clip and can provide a defined arrangement of the tubular member that is adapted to the installation situation.

The locking structure comprises engaging portions configured to form a frictional connection or a positive locking, thereby fixing the first supporting portion and the second supporting portion at the predetermined angular positions. In a preferred embodiment the first supporting portion and the second supporting portion form a fixing angle at the predetermined angular positions. The fixing angle is preferably between 10° and 90°, in particular between 20° and 80°. The locking structure can include a first engaging portion and a second engaging portion spaced apart from the first engaging portion. Preferably the locking structure further comprises a recessed portion disposed between the first engaging portion and the second engaging portion. In this case the locking member can have substantially a dumbbell or bonelike cross section, when viewed from above. In a preferred embodiment the engaging portion includes a friction surface which can be a ratchet or a structured surface. A frictional connection can easily be implemented and provides enough stability to maintain the first supporting portion and the second supporting portions at the predetermined angular positions. Also a higher resilience of the supporting clip against vibrations can be achieved.

Furthermore the supporting clip can comprise a torsional reinforcing structure configured to reduce relative torsional movement between the first supporting portion and the second supporting, in particular about an axis parallel to the longitudinal direction. Preferably the torsional reinforcing structure comprises at least one transverse reinforcement configured to reduce warping of the first supporting portion with respect to a transverse direction. Alternatively or additionally the torsional reinforcing structure comprises at least one transverse reinforcement configured to reduce warping of the second supporting portion with respect to a transverse direction. Preferably the transverse reinforcement is disposed between the first support and the third support. Preferably the transverse reinforcement is integrally formed together with the first support and the third support. In an advantageous embodiment the transverse reinforcement is disposed between the second support and the fourth support. The transverse reinforcement can be integrally formed together with the second support and the fourth support. In another advantageous embodiment the torsional reinforcing structure comprises a longitudinal reinforcement configured to reduce warping of any of the first supporting portion and the second supporting portion with respect to the longitudinal direction. Preferably the longitudinal reinforcement extends between the locking structure and any of the first supporting portion and the second supporting portion. Furthermore the torsional reinforcing structure can be configured to transmit a torque between the locking structure and any of the first supporting portion and the second supporting portion. The transverse reinforcement and the longitudinal reinforcement can be integrally formed as a single unitary member, for example by injection molding. This supporting clip can maintain its shape and is therefore not easily deformed by external loads. The torsional reinforcing structure can also be implemented integrally with the locking structure thereby reducing relative movement even further.

In a further preferred embodiment any of the first supporting portion, the second supporting portion, and the locking structure is made from a polymeric material, in particular an elastomer, a thermoplastic or a thermoplastic elastomer or a mixture thereof. Preferred materials are among others, rubber, PP and EPDM. Preferably at least two, most preferred all, of the first supporting portion, the second supporting portion, and the locking structure are integrally formed as a single unitary member, for example by injection molding.

An advantageous pipe assembly comprises a tubular member and a supporting clip according to an advantageous embodiment described herein. The tubular member is mounted to the supporting clip. The supporting clip is preferably disposed at a bending portion of the tubular member. An advantageous vehicle comprises a supporting clip or a pipe assembly according to an advantageous embodiment described herein.

The invention is described with reference to the drawings. The Figures are listed below:
- Fig. 1: is a perspective view of a pipe assembly having a supporting clip according to a first embodiment;
- Fig. 2: is a perspective view of the supporting clip according to the first embodiment;
- Fig. 3: is a side view of the supporting clip according to the first embodiment;
- Fig. 4: is a perspective view of a supporting clip according to a second embodiment;
- Fig. 5: is a top view of the supporting clip according to the second embodiment;
- Fig. 6: is a front view of the supporting clip according to the second embodiment;
- Fig. 7: is a perspective view of a pipe assembly having supporting clip according to a third embodiment; and
- Fig. 8: is a perspective view of the supporting clip according to the third embodiment.

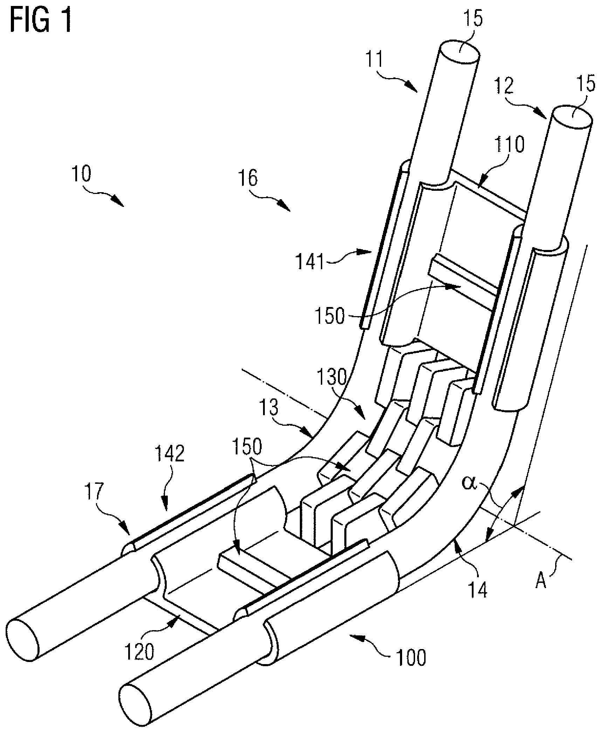

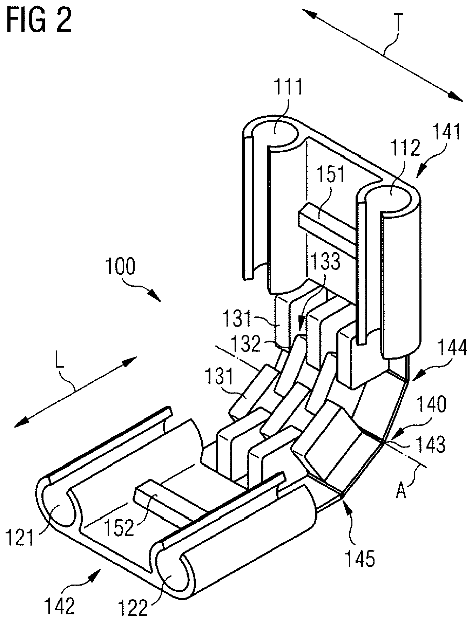

Referring to Figs. 1 to 3 a pipe assembly 10 comprises a first tubular member 11 and a second tubular member 12. The first tubular member 11 has a first bending portion 13 which is curved. The second tubular member 12 has a second bending portion 14 which is curved. The first tubular member 11 and the second tubular member 12 can be configured as a brake pipe 15 of a brake system of a vehicle, respectively. It is also conceivable that any of the first tubular member 11 and the second tubular member 12 is configured as a fuel pipe.

The pipe assembly 10 further comprises a supporting clip 100 for supporting the first tubular member 11 and the second tubular member 12. The first tubular member 11 and the second tubular member 12 are fastened to the supporting clip 100 in a form fitting manner.

The supporting clip 100 comprises a first supporting portion 110, a second supporting portion 120, and a locking structure 130. The supporting clip 100 extends in a longitudinal direction L and a transverse direction T so as to form an overall rectangular shape, when viewed from above. The supporting clip 100 is flexible and can be bent about an instantaneous rotational axis herein referred to as rotational axis A. It is noted, that the rotational axis A can also be spatially fixed.

The first supporting portion 110 is configured to engage the first tubular member 11 and the second tubular member 12 at a first position 16 in a form fitting manner, respectively. The first supporting portion 110 includes a first support 111 and a second support 112. The first support 111 has a substantially cylindrical shape having a gap to insert the tubular member 11. The tubular member 11 is held in a form fitting manner, when inserted in the first support 111. The second support 112 is substantially identical to the first support 111 and spaced apart from the first support 111 at a first distance d₁ measured along the transverse direction T. However, the second support 112 does not need to be identical to the first support 111 as long as the second support 112 is able to hold the second tubular member 12 in a form fitting manner.

The second supporting portion 120 is configured to engage the first tubular member 11 and the second tubular member 12 at a second position 17 in a form fitting manner, respectively. The second supporting portion 120 includes a third support 121 and a fourth support 122. The second support 121 has a substantially cylindrical shape having a gap to insert the tubular member 11. The tubular member 11 is held in a form fitting manner, when inserted in the third support 121. The fourth support 122 is substantially identical to the third support 122 and spaced apart from the third support 121 at a second distance d₂ measured along the transverse direction T. However, the fourth support 122 does not need to be identical to the third support 121 as long as the fourth support 122 is able to hold the second tubular member 12 in a form fitting manner.

The locking structure 130 is configured to prevent a relative movement between the first supporting portion 110 and the second supporting portion 120. The locking structure 130 comprises a plurality of locking members 131. The locking members 131 are formed as substantially rectangular protrusions protruding from a plane formed by the transverse direction T and the longitudinal direction L when viewed from above. At least some of the locking members 131 include an engaging portion 132. The engaging portion 132 is configured to contact another engaging portion 132 so as to generate a force preventing a relative movement of the first supporting portion 110 and the second supporting portion 120. The engaging portion 132 is advantageously disposed on the sides of some of the locking members 131. Other placements, however, are also possible, as long as a force can be generated that prevents relative movement of the first supporting portion 110 and the second supporting portion 120. Furthermore, the engaging portion 132 preferably has a friction surface 133. The friction surface 133 is configured to generate a frictional force which acts against a relative movement of the first supporting portion 110 and the second supporting portion 120. In a modification of the supporting clip 100 the engaging portion 132 is configured as a ratchet assembly similar to the ones used on cable ties.

The supporting clip 100 preferably includes a joint 140 disposed between the first supporting portion 110 and the second supporting portion 120 along the longitudinal direction L. The joint 140 includes a first leg 141, a second leg 142, and a flexure bearing 143. The first leg 141 includes the first supporting portion 110 while the second leg 142 includes the second supporting portion 120. In this case the rotational axis A is substantially defined by the joint 140. The flexure bearing 143 connects the first leg 141 and the second leg 142.

The first leg 141 can further include a second joint 144 disposed between the first supporting portion 110 and the joint 140 along the longitudinal direction L. The second leg 142 may include a third joint 145 disposed between the second supporting portion 120 and the joint 140 along the longitudinal direction L. In this case the rotational axis A is defined by the interaction of the joint 140, the second joint 144, and the third joint 145. Consequently, the rotational axis A is not spatially fixed but defined as an instantaneous axis of rotation.

The supporting clip 100 can further include a torsional reinforcing structure 150. The torsional reinforcing structure 150 is configured to reduce relative torsional movement between the first supporting portion 110 and the second supporting portion 120. The torsional reinforcing structure 150 includes the locking structure 130, a first transverse reinforcement 151, and a second transverse reinforcement 152. The locking structure 130 is in this case configured so as to be able to engage the first tubular member 11, the second tubular member 12, and each other in such a way, that force can be transmitted in the transverse direction T from the first tubular member 11 via the locking structure 130 to the second tubular member 12.

The first transverse reinforcement 151 is disposed so as to transmit force between the first support 111 and the second support 112. The first transverse reinforcement 151 is formed as a bar-like protrusion protruding from the plane defined by the transverse direction T and the longitudinal direction L. The first transverse reinforcement 152 is disposed so as to transmit force between the third support 121 and the fourth support 122. The second transverse reinforcement 152 is formed as a bar-like protrusion protruding from the plane defined by the transverse direction T and the longitudinal direction L.

In the following the action of the supporting clip 100 is discussed. The supporting clip 100 is fastened to the first tubular member 11 and the second tubular member 12 at the first position 16. In order to fasten the supporting clip 100 at the second position 17, the second supporting portion 120 is moved relative to the first supporting portion 110 about the rotational axis A. When the second supporting portion 120 engages the first tubular member 11 and the second tubular member 12 at the second position 17, the first tubular member 11 is inserted into the third support 121 and the second tubular member 12 is inserted into the fourth support 122. The supporting clip 100 is now fastened to the first tubular member 11 and the second tubular member 12 at the first position 16 and the second position 17, respectively. At a predetermined angular position of the first supporting portion 110 with respect to the second supporting portion 120 the locking structure 130 starts to engage. The engaging portions 132 contact each other and generate a force acting against the relative movement of the second supporting portion 120, thereby fixing the first supporting portion 110 and the second supporting portion at a predetermined angular position. The first supporting portion 110 and the second supporting portion 120 form a fixing angle α at which the first supporting portion 110 is fixed with respect to the second supporting portion 120. The fixing angle α is usually between 10° and 90°, depending on the bending portion 14 of the first tubular member 11 and the second tubular member 12. The engaging portions 132 continue to engage as the second supporting portion 120 is moved further into its final position at the first tubular member 11 and the second tubular member 12, namely the second position 17. In this configuration, the locking structure 130 can distribute external loads between the first tubular member 11 and the second tubular member 12. Thus, the first tubular member 11 and the second tubular member 12 are affected in substantially the same manner by external loads. Consequently, relative movement between the first tubular member 11 and the second tubular member 12 can be reduced thereby stabilizing the whole pipe assembly 10.

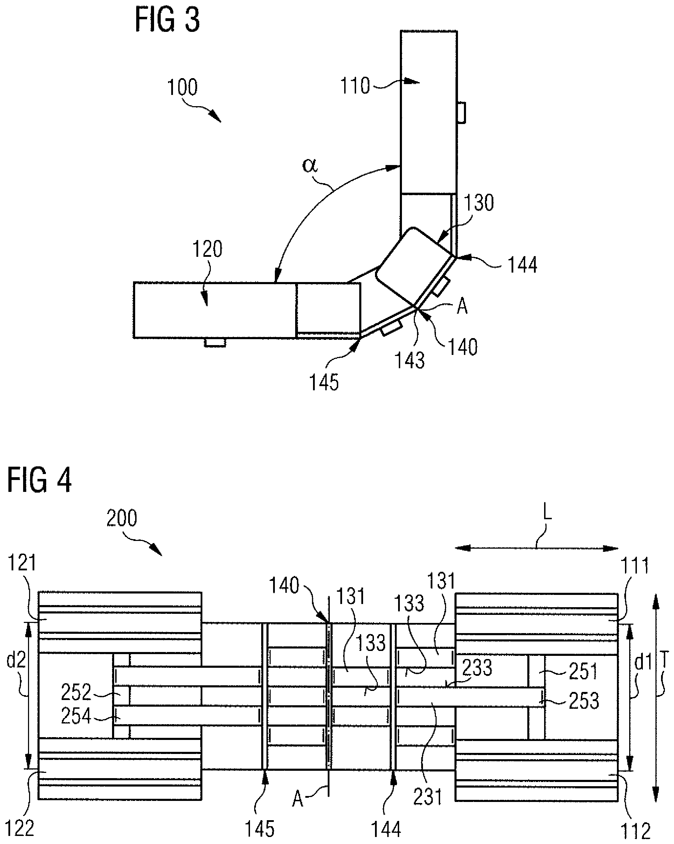

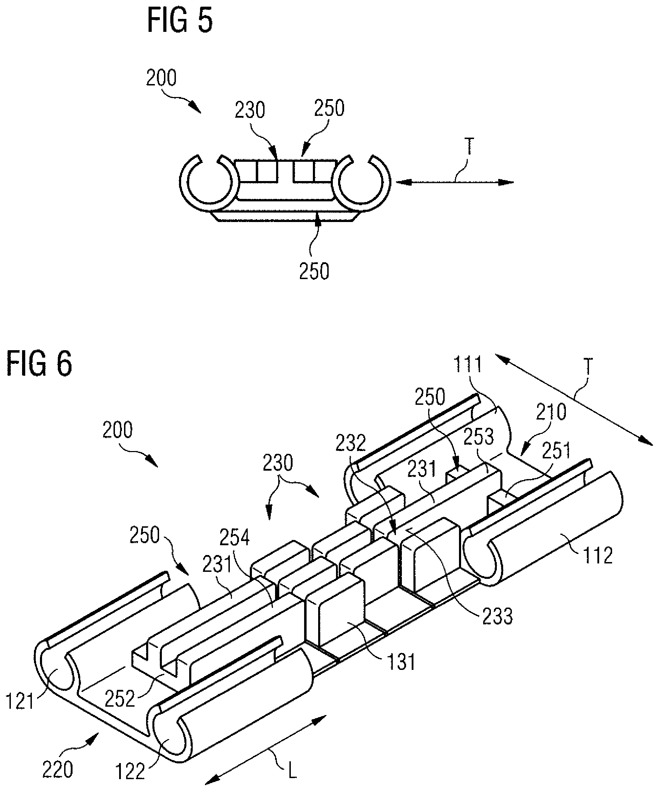

Referring now to Figs. 4 to 6 a supporting clip 200 according to a second embodiment is described. The supporting clip 200 will only be described in so far as it differs from the supporting clip 100.

The supporting clip 200 comprises a first supporting portion 210, a second supporting portion 220, and a locking structure 230. The first supporting portion 210 is substantially identical to the first supporting portion 110, and the second supporting portion 220 is substantially identical to the second supporting portion 220

The locking structure 230 is configured to prevent a relative movement between the first supporting portion 210 and the second supporting portion 220. Additionally to the locking members 131, the locking structure 230 comprises a plurality of locking members 231. The locking members 131 are formed as substantially rectangular protrusions protruding from a plane formed by the transverse direction T and the longitudinal direction L when viewed from above. The locking members 231 include an engaging portion 232. The engaging portion 232 is configured to contact an engaging portion 132 so as to generate a force preventing a relative movement of the first supporting portion 210 and the second supporting portion 220. Otherwise the engaging portion 232 is identical to the engaging portion 132. In particular the engaging portion 232 includes a friction surface 233 similar to the friction surface 133.

The supporting clip 200 furthers include a torsional reinforcing structure 250. The torsional reinforcing structure 150 is configured to reduce relative torsional movement between the first supporting portion 210 and the second supporting portion 220. The torsional reinforcing structure 150 includes the locking structure 230, a first transverse reinforcement 251, a second transverse reinforcement 252, a first longitudinal reinforcement 253, and a second longitudinal reinforcement 254.

The first transverse reinforcement 251 and the second transverse reinforcement 252 are substantially identical to the first embodiment. The first longitudinal reinforcement 253 is integrally formed with the first transverse reinforcement 251 and extends in the longitudinal direction L. The first transverse reinforcement 251 can be integrally formed with one of the locking members 231. The second longitudinal reinforcement 254 is integrally formed with the second transverse reinforcement 252 and extends in the longitudinal direction L. The second transverse reinforcement 252 can be integrally formed with one of the locking members 231. Additional stability can be achieved with the supporting clip 200, inter alia due to the integral connection of the locking members 231 with the torsional reinforcing structure 250.

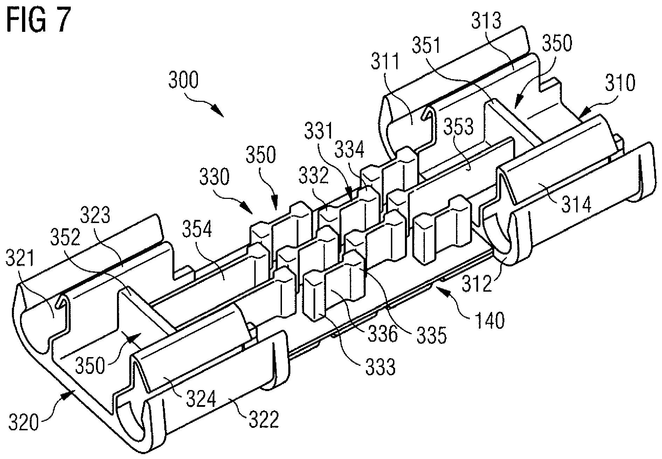

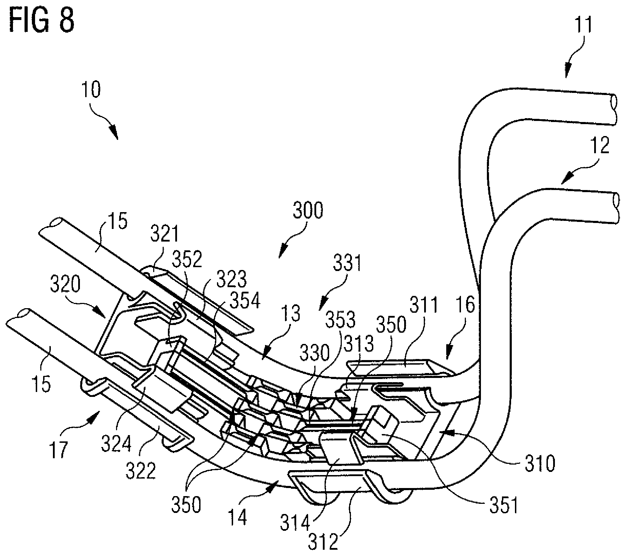

Referring now to Figs. 7 and 8 a supporting clip 300 according to a third embodiment is described. The supporting clip 300 will only be described in so far as it differs from the supporting clip 100 and the supporting clip 200. The supporting clip 300 comprises a first supporting portion 310, a second supporting portion 320, and a locking structure 330.

The first supporting portion 310 is configured to engage the first tubular member 11 and the second tubular member 12 at a first position 16 in a form fitting manner, respectively. The first supporting portion 310 includes a first support 311 and a second support 312. The first support 311 comprises a first fastening latch 313 and has a substantially cylindrical shape having a gap to insert the tubular member 11. The tubular member 11 is held in a form fitting manner, when inserted in the first support 311, by the first fastening latch 313. The second support 312 is substantially identical to the first support 311 and comprises a second fastening latch 314. The second support 312 is spaced apart from the first support 311 at a first distance d₁ measured along the transverse direction T. However, the second support 312 does not need to be identical to the first support 311 as long as the second support 312 is able to hold the second tubular member 12 in a form fitting manner, for example via the second fastening latch 314.

The second supporting portion 320 is configured to engage the first tubular member 11 and the second tubular member 12 at a first position 16 in a form fitting manner, respectively. The second supporting portion 320 includes a third support 321 and a fourth support 322. The third support 321 comprises a third fastening latch 323 and has a substantially cylindrical shape having a gap to insert the tubular member 11. The tubular member 11 is held in a form fitting manner, when inserted in the third support 321, by the third fastening latch 323. The fourth support 322 is substantially identical to the third support 321 and comprises a fourth fastening latch 324. The fourth support 322 is spaced apart from the third support 321 at a second distance d₂ measured along the transverse direction T. However, the fourth support 322 does not need to be identical to the third support 311 as long as the fourth support 322 is able to hold the second tubular member 12 in a form fitting manner, for example via the fourth fastening latch 324.

The locking structure 330 is configured to prevent a relative movement between the first supporting portion 310 and the second supporting portion 320. The locking structure 330 comprises a plurality of locking members 331. The locking members 331 include a first engaging portion 332 and a second engaging portion 334. The first engaging portion 332 and the second engaging portion 334 are substantially rectangular pillar-shaped protrusions and are spaced apart in the longitudinal direction L by a recessed portion 336. The first engaging portion 332 is configured to contact the second engaging portion 334 so as to generate a force preventing a relative movement of the first supporting portion 310 and the second supporting portion 330.

The supporting clip 300 furthers include a torsional reinforcing structure 350. The torsional reinforcing structure 350 is configured to reduce relative torsional movement between the first supporting portion 310 and the second supporting portion 320. The torsional reinforcing structure 350 includes the locking structure 330, a first transverse reinforcement 351, a second transverse reinforcement 352, a first longitudinal reinforcement 353, and a second longitudinal reinforcement 354. The first transverse reinforcement 351, the second transverse reinforcement 352, the first longitudinal reinforcement 353, and the second longitudinal reinforcement 354 are substantially identical to the second embodiment.

The supporting clips described herein allow for a stable arrangement of tubular members such as brake pipes or fuel pipes. Thus, preassembled components can be handled in a more simplistic manner. The components are readily available out-of-the-box for assembly at the vehicle under production.

### List of Reference Signs

- 10: pipe assembly
- 11: first tubular member
- 12: second tubular member
- 13: first bending portion
- 14: second bending portion
- 15: brake pipe
- 16: first position
- 17: second position

- 100: supporting clip

- 110: first supporting portion
- 111: first support
- 112: second support

- 120: second supporting portion
- 121: third support
- 122: fourth support

- 130: locking structure
- 131: locking member
- 132: engaging portion
- 133: friction surface

- 140: joint
- 141: first leg
- 142: second leg
- 143: flexure bearing

- 144: second joint
- 145: third joint

- 150: torsional reinforcing structure
- 151: first transverse reinforcement
- 152: second transverse reinforcement

- 200: supporting clip
- 210: first supporting portion
- 220: second supporting portion

- 230: locking structure
- 231: locking member
- 232: engaging portion
- 233: friction surface

- 250: torsional reinforcing structure
- 251: first transverse reinforcement
- 252: second transverse reinforcement
- 253: first longitudinal reinforcement
- 254: second longitudinal reinforcement

- 300: supporting clip

- 310: first supporting portion
- 311: first support
- 312: second support
- 313: first fastening latch
- 314: second fastening latch
- 320: second supporting portion
- 321: third support

- 322: fourth support
- 323: third fastening latch
- 324: fourth fastening latch

- 330: locking structure
- 331: locking member
- 332: first engaging portion
- 333: first friction surface
- 334: second engaging portion
- 335: second friction surface
- 336: recessed portion

- 350: torsional reinforcing structure
- 351: first transverse reinforcement
- 352: second transverse reinforcement
- 353: first longitudinal reinforcement
- 354: second longitudinal reinforcement

- α: fixing angle

- A: rotational axis
- L: longitudinal direction
- T: transverse direction

- d₁: first distance
- d₂: second distance

## Claims

1. Supporting clip (100, 200, 300) configured to support at least one tubular member (11, 12) of a vehicle, in particular a fuel pipe or a brake pipe (15), the supporting clip (100, 200, 300) extending in a longitudinal direction (L) and comprising:
a first supporting portion (110, 210, 310) for supporting the tubular member (11, 12) at a first position (16);
a second supporting portion (120, 220, 320) for supporting the tubular member (11, 12) at a second position (17) spaced apart from the first position (16) in the longitudinal direction (L);
a locking structure (130, 230, 330) disposed between the first supporting portion (110, 210, 310) and the second supporting portion (120, 220, 330) and comprising a plurality of locking members (131, 231, 331);
wherein the first supporting portion (110, 210, 310) and the second supporting portion (120, 220, 320) are pivotable relative to each other about a rotational axis (A), thereby defining an angular position;
wherein each locking member (131, 231, 331) comprises an engaging portion (132, 232, 332, 334) having a friction surface (133, 233, 333, 335) and being configured to contact another engaging portion (132, 232, 332, 334), thereby forming a frictional connection fixing the first supporting portion (110, 210, 310) and the second supporting portion (120, 220, 320) at predetermined angular positions so as to prevent a relative rotational movement between the first supporting portion (110, 210, 310) and the second supporting portion (120, 220, 320) when the first supporting portion (110, 210, 310) and the second supporting portion (120, 220, 320) are arranged at the predetermined angular positions.

2. Supporting clip (100, 200, 300) according to claim 1, **characterized by** a joint (140) having a first leg (141) and a second leg (142), wherein the first leg (141) includes the first supporting portion (110, 210, 310) and the second leg (142) includes the second supporting portion (120, 220, 320), wherein preferably the joint (140) includes a flexure bearing (143).

3. Supporting clip according to claim 1 or 2, **characterized in that** the first supporting portion (110, 210, 310) comprises a first support (111, 311) for a first tubular member (11) and a second support (112, 312) for a second tubular member (12), the second support (112, 312) being spaced apart from the first support (11) at a first distance (d₁) in a transverse direction (T) extending substantially orthogonally to the longitudinal direction (L), wherein preferably the second supporting portion (120, 220, 320) comprises a third support (121, 321) for the first tubular member (11) and a fourth support (122, 322) for the second tubular member (12), the fourth support (122, 322) being spaced apart from the third support (121, 321) at a second distance (d₂) in the transverse direction (T), wherein preferably the first distance (d₁) and the second distance (d₂) are equal.

4. Supporting clip (100, 200, 300) according to any of the claims 1 to 3, **characterized in that** any of the first supporting portion (110, 210, 320) and the second supporting portion (120, 220, 320) is configured to engage the tubular member (11, 12) in a form fitting manner, wherein preferably any of the first supporting portion (310) and the second supporting portion (320) includes a fastening latch (313, 314, 323, 324).

5. Supporting clip (100, 200, 300) according to any of the claims 1 to 4, **characterized in that** the first supporting portion (110, 210, 310) and the second supporting portion (120, 220, 320) form a fixing angle (α) at the predetermined angular positions, the fixing angle (α) being between 10° and 120°, in particular between 20° and 80°.

6. Supporting clip (300) according to claim 5, **characterized in that** the locking structure (330) comprises a first engaging portion (332) and a second engaging portion (334) spaced apart from the first engaging portion (332), wherein preferably the locking structure (330) further comprises a recessed portion (336) disposed between the first engaging portion (332) and the second engaging portion (334).

7. Supporting clip (100, 200, 330) according to any of the claims 1 to 6, **characterized in that** the friction surface (133, 233, 333, 335) is configured as a structured surface.

8. Supporting clip (100, 200, 300) according to any of the claims 1 to 7, **characterized by** a torsional reinforcing structure (150, 250, 350) configured to reduce relative torsional movement between the first supporting portion (110, 210, 310) and the second supporting portion (120, 220, 320) about an axis parallel to the longitudinal direction (L).

9. Supporting clip (100, 200, 300) according to claims 3 and 8, **characterized in that** the torsional reinforcing structure (150, 250, 350) comprises at least one transverse reinforcement (151, 152, 251, 252, 351, 352) extending in a transverse direction (T) and configured to reduce warping of any of the first supporting portion (110, 210, 310) and the second supporting portion (120, 220, 320) with respect to the transverse direction (T), wherein preferably the transverse reinforcement (151, 251, 351) is disposed between the first support (111, 311) and the second support (112, 312), wherein preferably the transverse reinforcement (151, 251, 351) is integrally formed together with the first support (111, 311) and the second support (112, 312), wherein preferably the transverse reinforcement (152, 252, 352) is disposed between the third support (121, 321) and the fourth support (122, 322), wherein preferably the transverse reinforcement (152, 252, 352) is integrally formed together with the third support (121, 321) and the fourth support (122, 322).

10. Supporting clip (200, 300) according to claim 8 or 9, **characterized in that** the torsional reinforcing structure (250, 350) comprises a longitudinal reinforcement (253, 254, 353, 354), configured to reduce warping of any of the first supporting portion (210, 310) and the second supporting portion (220, 320) with respect to the longitudinal direction (L), wherein preferably the longitudinal reinforcement (253, 254, 353, 354) extends between the locking structure (230, 330) and any of the first supporting portion (210, 310) and the second supporting portion (220, 320).

11. Supporting clip (100, 200, 300) according to any of the claims 8 to 10, **characterized in that** the torsional reinforcing structure (150, 250, 350) is configured to transmit a torque between the locking structure (130, 230, 330) and any of the first supporting portion (110, 210, 310) and the second supporting portion (120, 220, 320), wherein preferably the transverse reinforcement (151, 152, 251, 252, 351, 352) and the longitudinal reinforcement (253, 254, 353, 354) are integrally formed as a single unitary member.

12. Supporting clip (100, 200, 300) according to any of the claims 1 to 11, **characterized in that** any of the first supporting portion (110, 210, 310), the second supporting portion (120, 220, 320), and the locking structure (130, 230, 330) is made from a polymeric material, in particular an elastomer, a thermoplastic, a thermoplastic elastomer or a mixture thereof.

13. Supporting clip (100, 200, 300) according to any of the claims 1 to 12, **characterized in that** at least two of the first supporting portion (110, 210, 310), the second supporting portion (120, 220, 320), and the locking structure (130, 230, 330) are integrally formed, in particular by injection molding, as a single unitary member.

14. Pipe assembly (10) comprising a tubular member (11, 12) and a supporting clip (100, 200, 300) according to any of the claims 1 to 13, wherein the tubular member (11, 12) is mounted to the supporting clip (100, 200, 300), and preferably the supporting clip (100, 200, 300) is disposed at a bending portion (13, 14) of the tubular member (11, 12).

15. Vehicle comprising a supporting clip (100, 200, 300) according to any of the claims 1 to 13 or a pipe assembly (10) according to claim 14.

## Patentansprüche

1. Stützklammer (100, 200, 300), die so ausgestaltet ist, dass sie mindestens ein rohrförmiges Element (11, 12) eines Fahrzeugs, insbesondere eine Kraftstoffleitung oder eine Bremsleitung (15), abstützt, wobei sich die Stützklammer (100, 200, 300) in einer Längsrichtung (L) erstreckt und Folgendes umfasst:
einen ersten Stützabschnitt (110, 210, 310) zum Abstützen des rohrförmigen Elements (11, 12) in einer ersten Position (16);
einen zweiten Stützabschnitt (120, 220, 320) zum Abstützen des rohrförmigen Elements (11, 12) an einer zweiten Position (17), die von der ersten Position (16) in der Längsrichtung (L) beabstandet ist;
eine Verriegelungsstruktur (130, 230, 330), die zwischen dem ersten Stützabschnitt (110, 210, 310) und dem zweiten Stützabschnitt (120, 220, 330) angeordnet ist und eine Vielzahl von Verriegelungselementen (131, 231, 331) umfasst;
wobei der erste Stützabschnitt (110, 210, 310) und der zweite Stützabschnitt (120, 220, 320) um eine Drehachse (A) relativ zueinander schwenkbar sind, wodurch eine Winkellage definiert wird;
wobei jedes Verriegelungselement (131, 231, 331) einen Eingriffsabschnitt (132, 232, 332, 334) mit einer Reibfläche (133, 233, 333, 335) umfasst und so ausgestaltet ist, dass es mit einen anderen Eingriffsabschnitt (132, 232, 332, 334) in Kontakt steht, wodurch eine kraftschlüssige Verbindung gebildet wird, die den ersten Stützabschnitt (110, 210, 310) und den zweiten Stützabschnitt (120, 220, 320) in vorbestimmten Winkelpositionen fixiert, um eine relative Drehbewegung zwischen dem ersten Stützabschnitt (110, 210, 310) und dem zweiten Stützabschnitt (120, 220, 320) zu verhindern, wenn der erste Stützabschnitt (110, 210, 310) und der zweite Stützabschnitt (120, 220, 320) in den vorbestimmten Winkelpositionen angeordnet sind.

2. Stützklammer (100, 200, 300) nach Anspruch 1, **gekennzeichnet durch** ein Gelenk (140) mit einem ersten Schenkel (141) und einem zweiten Schenkel (142), wobei der erste Schenkel (141) den ersten Stützabschnitt (110, 210, 310) umfasst und der zweite Schenkel (142) den zweiten Stützabschnitt (120, 220, 320) umfasst, wobei vorzugsweise das Gelenk (140) ein Biegelager (143) umfasst.

3. Stützklammer nach Anspruch 1 oder 2, **dadurch gekennzeichnet, dass** der erste Stützabschnitt (110, 210, 310) eine erste Stütze (111, 311) für ein erstes rohrförmiges Element (11) und eine zweite Stütze (112, 312) für ein zweites rohrförmiges Element (12) umfasst, wobei die zweite Stütze (112, 312) von der ersten Stütze (11) in einem ersten Abstand (d₁) in einer Querrichtung (T), die sich im Wesentlichen orthogonal zu der Längsrichtung (L) erstreckt, beabstandet ist, wobei vorzugsweise der zweite Stützabschnitt (120, 220, 320) eine dritte Stütze (121, 321) für das erste rohrförmige Element (11) und eine vierte Stütze (122, 322) für das zweite rohrförmige Element (12) umfasst, wobei die vierte Stütze (122, 322) von der dritten Stütze (121, 321) in einem zweiten Abstand (d₂) in der Querrichtung (T) beabstandet ist, wobei vorzugsweise der erste Abstand (d₁) und der zweite Abstand (d₂) gleich sind.

4. Stützklammer (100, 200, 300) nach einem der Ansprüche 1 bis 3, **dadurch gekennzeichnet, dass** der erste Stützabschnitt (110, 210, 310) und der zweite Stützabschnitt (120, 220, 320) beide so ausgestaltet sind, dass sie in das rohrförmige Element (11, 12) in formschlüssiger Weise eingreifen, wobei vorzugsweise einer von dem ersten Stützabschnitt (310) und dem zweiten Stützabschnitt (320) eine Befestigungslasche (313, 314, 323, 323, 324) aufweist.

5. Stützklammer (100, 200, 300) nach einem der Ansprüche 1 bis 4, **dadurch gekennzeichnet, dass** der erste Stützabschnitt (110, 210, 310) und der zweite Stützabschnitt (120, 220, 320) einen Fixierwinkel (α) in den vorbestimmten Winkelpositionen bilden, wobei der Fixierwinkel (α) zwischen 10° und 120° liegt, insbesondere zwischen 20° und 80°.

6. Stützklammer (300) nach Anspruch 5, **dadurch gekennzeichnet, dass** die Verriegelungsstruktur (330) einen ersten Eingriffsabschnitt (332) umfasst und einen zweiten Eingriffsabschnitt (334), der von dem ersten Eingriffsabschnitt (332) beabstandet ist, wobei vorzugsweise die Verriegelungsstruktur (330) des Weiteren einen vertieften Bereich (336) umfasst, der zwischen dem ersten Eingriffsabschnitt (332) und dem zweiten Eingriffsabschnitt (334) angeordnet ist.

7. Stützklammer (100, 200, 300) nach einem der Ansprüche 1 bis 6, **dadurch gekennzeichnet, dass** die Reibfläche (133, 233, 333, 335) als strukturierte Oberfläche ausgelegt ist.

8. Stützklammer (100, 200, 300) nach einem der Ansprüche 1 bis 7, **gekennzeichnet durch** eine Torsionsverstärkungsstruktur (150, 250, 350), die dazu ausgelegt ist, eine relative Torsionsbewegung zwischen dem ersten Stützabschnitt (110, 210, 310) und dem zweiten Stützabschnitt (120, 220, 320) um eine Achse parallel zu der Längsrichtung (L) zu verringern.

9. Stützklammer (100, 200, 300) nach den Ansprüchen 3 und 8, **dadurch gekennzeichnet, dass** die Torsionsverstärkungsstruktur (150, 250, 350) zumindest eine Querverstärkung (151, 152, 251, 252, 351, 352) umfasst, die sich in eine Querrichtung (T) erstreckt und die ausgelegt ist, ein Verziehen von einem von ersten Stützabschnitt (110, 210, 310) und zweiten Stützabschnitt (120, 220, 320) in Bezug auf die Querrichtung (T) zu reduzieren, wobei vorzugsweise die Querverstärkung (151, 251, 351) zwischen der ersten Stütze (111, 311) und der zweiten Stütze (112, 312) angeordnet ist, wobei vorzugsweise die Querverstärkung (151, 251, 351) einstückig mit der ersten Stütze (111, 311) und der zweiten Stütze (112, 312) ausgebildet ist, wobei vorzugsweise die Querverstärkung (152, 252, 352) zwischen der dritten Stütze (121, 321) und der vierten Stütze (122, 322) angeordnet ist, und wobei vorzugsweise die Querverstärkung (152, 252, 352) einstückig mit der dritten Stütze (121, 321) und der vierten Stütze (122, 322) ausgebildet ist.

10. Stützklammer (200, 300) nach Anspruch 8 oder 9, **dadurch gekennzeichnet, dass** die Torsionsverstärkungsstruktur (250, 350) eine Längsverstärkung (253, 254, 353, 354) umfasst, die ausgelegt ist, das Verziehen von einem von dem ersten Stützabschnitt (210, 310) und von dem zweiten Stützabschnitt (220, 320) in Bezug auf die Längsrichtung (L) zu reduzieren, wobei vorzugsweise die Längsverstärkung (253, 254, 353, 354) sich zwischen der Verriegelungsstruktur (230, 330) und einem von dem ersten Stützabschnitt (210, 310) und von dem zweiten Stützabschnitt (220, 320) erstreckt.

11. Stützklammer (100, 200, 300) nach einem der Ansprüche 8 bis 10, **dadurch gekennzeichnet, dass** die Torsionsverstärkungsstruktur (150, 250, 350) so ausgelegt ist, dass sie ein Drehmoment zwischen der Verriegelungsstruktur (130, 230, 330) und einem der ersten Stützabschnitt (110, 210, 310) und dem zweiten Stützabschnitt (120, 220, 320) überträgt, wobei vorzugsweise die Querverstärkung (151, 152, 251, 252, 351, 352) und die Längsverstärkung (253, 254, 353, 354) integral als einstückiges Element ausgebildet sind.

12. Stützklammer (100, 200, 300) nach einem der Ansprüche 1 bis 11, **dadurch gekennzeichnet, dass** ein jedes von dem ersten Stützabschnitt (110, 210, 310), dem zweiten Stützabschnitt (120, 220, 320) und der Verriegelungsstruktur (130, 230, 330) aus einem polymeren Material, insbesondere einem Elastomer, einem Thermoplast, einem thermoplastischen Elastomer oder einer Mischung davon, hergestellt ist.

13. Stützklammer (100, 200, 300) nach einem der Ansprüche 1 bis 12, **dadurch gekennzeichnet, dass** zumindest zwei von dem ersten Stützabschnitt (110, 210, 310), dem zweiten Stützabschnitt (120, 220, 320) und der Verriegelungsstruktur (130, 230, 330) integral als einstückiges Element ausgebildet sind, insbesondere durch Spritzgießen.

14. Rohranordnung (10), umfassend ein rohrförmiges Element (11, 12) und eine Stützklammer (100, 200, 300) nach einem der Ansprüche 1 bis 13, wobei das rohrförmige Element (11, 12) an der Stützklammer (100, 200, 300) befestigt ist und vorzugsweise die Stützklammer (100, 200, 300) an einem Biegeabschnitt (13, 14) des rohrförmigen Elements (11, 12) angeordnet ist.

15. Fahrzeug, umfassend eine Stützklammer (100, 200, 300) nach einem der Ansprüche 1 bis 13 oder eine Rohranordnung (10) nach Anspruch 14.

## Revendications

1. Clip de support (100, 200, 300) configuré pour supporter au moins un élément tubulaire (11, 12) d'un véhicule, en particulier un tube à carburant ou un tube de freinage (15), le clip de support (100, 200, 300) s'étendant dans une direction longitudinale (L) et comprenant :
une première portion de support (110, 210, 310) pour supporter l'élément tubulaire (11, 12) à une première position (16) ;
une seconde portion de support (120, 220, 320) pour supporter l'élément tubulaire (11, 12) à une seconde position (17) espacée de la première position (16) dans la direction longitudinale (L) ;
une structure de blocage (130, 230, 330) disposée entre la première portion de support (110, 210, 310) et la seconde portion de support (120, 220, 330) et comprenant une pluralité d'éléments de blocage (131, 231, 331) ;
dans lequel la première portion de support (110, 210, 310) et la seconde portion de support (120, 220, 320) sont capables de pivoter l'une par rapport à l'autre autour d'un axe de rotation (A), en définissant ainsi une position angulaire ;
dans lequel chaque élément de blocage (131, 231, 331) comprend une portion d'engagement (132, 232, 332, 334) ayant une surface de friction (133, 233, 333, 335) et étant configurée pour venir en contact avec une autre portion d'engagement (132, 232, 332, 334), en formant ainsi une connexion en friction qui fixe la première portion de support (110, 210, 300) et la seconde portion de support (120, 220, 320) à des positions angulaires prédéterminées de façon à empêcher un mouvement de rotation relatif entre la première portion de support (110, 210, 300) et la seconde portion de support (120, 220, 320) quand la première portion de support (110, 210, 310) et la seconde portion de support (120, 220, 320) sont agencées aux positions angulaires prédéterminées.

2. Clip de support (100, 200, 300) selon la revendication 1, **caractérisé par** un joint (140) ayant une première branche (141) et une seconde branche (142), dans lequel la première branche (141) inclut la première portion de support (110, 210, 310) et la seconde branche (142) inclut la seconde portion de support (120, 220, 320), dans lequel de préférence le joint (140) inclut un palier à flexion (143).

3. Clip de support selon la revendication 1 ou 2, **caractérisé en ce que** la première portion de support (110, 210, 310) comprend un premier support (111, 311) pour un premier élément tubulaire (11) et un second support (112, 312) pour un second élément tubulaire (12), le second support (112, 312) étant espacé du premier support (11) à une première distance (d1) dans une direction transversale (T) s'étendant sensiblement perpendiculairement à la direction longitudinale (L), dans lequel de préférence la seconde portion de support (120, 220, 320) comprend un troisième support (121, 321) pour le premier élément tubulaire (11) et un quatrième support (122, 322) pour le second élément tubulaire (12), le quatrième support (122, 322) étant espacé du troisième support (121, 321) à une seconde distance (d2) dans la direction transversale (T), dans lequel de préférence la première distance (d1) et la seconde distance (d2) sont égales.

4. Clip de support (100, 200, 300) selon l'une quelconque des revendications 1 à 3, **caractérisé en ce que** l'une quelconque de la première portion de support (110, 210, 310) et de la seconde portion de support (120, 220, 320) est configurée pour engager l'élément tubulaire (11, 12) d'une manière à coopération de formes, dans lequel de préférence l'une quelconque de la première portion de support (310) et de la seconde portion de support (320) inclut un verrou de fixation (313, 314, 323, 324).

5. Clip de support (100, 200, 300) selon l'une quelconque des revendications 1 à 4, **caractérisé en ce que** la première portion de support (110, 210, 310) et la seconde portion de support (120, 220, 320) forment un angle de fixation (□) aux positions angulaires prédéterminées, l'angle de fixation (□) étant entre 10° et 120°, en particulier entre 20° et 80°.

6. Clip de support (300) selon la revendication 5, **caractérisé en ce que** la structure de blocage (330) comprend une première portion d'engagement (332) et une seconde portion d'engagement (334) espacée depuis la première portion d'engagement (332), dans lequel de préférence la structure de blocage (330) comprend en outre une portion évidée (336) disposée entre la première portion d'engagement (332) et la seconde portion d'engagement (334).

7. Clip de support (100, 200, 300) selon l'une quelconque des revendications 1 à 6, **caractérisé en ce que** la surface de friction (133, 233, 333, 335) est configurée comme une surface structurée.

8. Clip de support (100, 200, 300) selon l'une quelconque des revendications 1 à 7, **caractérisé par** une structure de renforcement vis-à-vis de la torsion (150,250,350) configurée pour réduire un mouvement de torsion relatif entre la première portion de support (110, 210, 310) et la seconde portion de support (120, 220, 320) autour d'un axe parallèle à la direction longitudinale (L).

9. Clip de support (100, 200, 300) selon les revendications 3 et 8, **caractérisé en ce que** la structure de renforcement vis-à-vis de la torsion (150, 250, 350) comprend au moins un renforcement transversal (151, 152, 251, 252, 351, 352) s'étendant dans une direction transversale (T) et configuré pour réduire un voilage de l'une quelconque de la première portion de support (110, 210, 310) et de la seconde portion de support (120, 220, 320) par rapport à la direction transversale (T), dans lequel de préférence le renforcement transversal (151, 251, 351) est disposé entre le premier support (111, 311) et le second support (112, 312), dans lequel de préférence de renforcement transversal (151, 251, 351) est formé de manière intégrale ensemble avec le premier support (111, 311) et le second support (112, 312), dans lequel de préférence le renforcement transversal (152, 252, 352) est disposé entre le troisième support (121, 321) et le quatrième support (122, 322), dans lequel de préférence le renforcement transversal (152, 252, 352) est formé de manière intégrale ensemble avec le troisième support (121, 321) et le quatrième support (122, 322).

10. Clip de support (200, 300) selon la revendication 8 ou 9, **caractérisé en ce que** la structure de renforcement vis-à-vis de la torsion (250, 350) comprend un renforcement longitudinal (253, 254, 353, 354), configuré pour réduire le voilage de l'une quelconque de la première portion de support (210, 310) et de la seconde portion de support (220, 320) par rapport à la direction longitudinale (L), dans lequel de préférence le renforcement longitudinal (253, 254, 353, 354) s'étend entre la structure de blocage (230, 330) et l'une quelconque de la première portion de support (210, 310) et de la seconde portion de support (220, 320).

11. Clip de support (100, 200, 300) selon l'une quelconque des revendications 8 à 10, **caractérisé en ce que** la structure de renforcement vis-à-vis de la torsion (150, 250, 350) est configurée pour transmettre un couple entre la structure de blocage (130, 230, 330) et l'une quelconque de la première portion de support (110, 210, 310) et de la seconde portion de support (120, 220, 320), dans lequel de préférence le renforcement transversal (151, 152, 251, 252, 351, 352) et le renforcement longitudinal (253, 254, 353, 354) sont formés de manière intégrale comme un unique élément unitaire.

12. Clip de support (100, 200, 300) selon l'une quelconque des revendications 1 à 11, **caractérisé en ce que** l'une quelconque de la première portion de support (110, 210, 310), de la seconde portion de support (120, 220, 320), et de la structure de blocage (130, 230, 330) est faite en un matériau polymère, en particulier un élastomère, une matière thermoplastique, un élastomère thermoplastique, ou un mélange de ceux-ci.

13. Clip de support (100, 200, 300) selon l'une quelconque des revendications 1 à 12, **caractérisé en ce qu'**au moins deux de la première portion de support (110, 210, 310), la seconde portion de support (120, 220, 320), et la structure de blocage (130, 230, 330) sont formées de manière intégrale, en particulier par moulage par injection, comme un unique élément unitaire.

14. Assemblage de tube (10) comprenant un élément tubulaire (11, 12) et un clip de support (100, 200, 300) selon l'une quelconque des revendications 1 à 13, dans lequel l'élément tubulaire (11, 12) est monté sur le clip de support (100, 200, 300), et de préférence le clip de support (100, 200, 300) est disposé au niveau d'une portion de flexion (13, 14) de l'élément tubulaire (11, 12).

15. Véhicule comprenant un clip de support (100, 200, 300) selon l'une quelconque des revendications 1 à 13, ou un assemblage de tube (10) selon la revendication 14.
